# EUROPEAN PATENT SPECIFICATION

(11) **EP 1 721 355 B1**
(45) Date of publication and mention of the grant of the patent: **21.07.2010**
(21) Application number: 05707693.7
(22) Date of filing: 03.03.2005
(51) Int. Cl.: H01M 8/10, H01M 8/04

(54) **MEMBRANE ELECTRODE UNIT**
MEMBRAN-ELEKTRODENEINHEIT
MEMBRANE-ELECTRODE-ASSEMBLAGE

(30) Priority: 05.03.2004 EP 04005219
(43) Date of publication of application: 15.11.2006
(73) Proprietor: Umicore AG & Co. KG, 63457 Hanau-Wolfgang (DE)
(72) Inventor: KOEHLER, Joachim, 63584 Gruendau (DE); GELZ, Markus, 63457 Hanau-Grossauheim (DE); ZUBER, Ralf, 63762 Grossostheim (DE)
(86) International application number: PCT/EP2005/002227
(87) International publication number: WO 2005/086271

(56) References cited:
- EP-A- 1 139 476
- EP-A- 1 229 600
- EP-A- 1 318 559
- US-A- 5 350 643
- US-A- 5 514 486

## Description

The invention relates to a membrane electrode unit for use in a membrane fuel cell. The novel membrane electrode units (MEUs) contain gas diffusion layers on the anode side and cathode side, which have different characteristics (i.e. water repellency and total pore volume). They are preferably suitable for use in polymer electrolyte membrane ("PEM") fuel cells which are operated with unhumidified operating gases (i.e. dry hydrogen, reformer gas or dry air).

Fuel cells convert a fuel and an oxidizing agent spatially separated from one another, at two electrodes, into power, heat and water. Hydrogen, a hydrogen-rich gas or methanol can serve as the fuel, and oxygen or air as the oxidizing agent. The process of energy conversion in the fuel cell is distinguished by a particularly high efficiency. For this reason, fuel cells in combination with electric motors are acquiring considerable importance as an alternative for conventional internal combustion engines. However, they are also increasingly being used for stationary and portable applications. The polymer electrolyte membrane fuel cell ("PEM" fuel cell) is distinguished by a compact design, a high power density and a high efficiency. The technology of the fuel cells is described in detail in the literature, cf. for example K. Kordesch and G. Simader, "Fuel Cells and their Applications", VCH Verlag Chemie, Weinheim (Germany) 1996. See also EP 1139476.

A PEM fuel cell stack consists of a stacked arrangement ("stack") of individual PEM fuel cells, which in turn consist of membrane electrode units ("MEU"s), between which so-called bipolar plates for gas supply and power conduction are arranged. In order to achieve a certain cell voltage, a large number of individual PEM fuel cells are stacked one behind the other. A membrane electrode unit has, as a rule, five layers and consists of an ion-conducting membrane which is provided on both sides with catalyst layers, namely the electrodes. One of the catalyst layers is in the form of an anode for the oxidation of hydrogen and the second catalyst layer is in the form of a cathode for the reduction of oxygen. Two gas diffusion layers (also referred to as "GDLs") comprising carbon fibre paper or carbon fabric, which permit good access of the reaction gases to the electrodes and good conduction of the cell current, are then applied to the electrode layers. The gas diffusion layers may consist of porous, electrically conductive materials, such as carbon fibre paper, carbon fibre nonwoven, woven carbon fibre fabrics, metal nets, metallized fibre fabrics and the like.

For gas-tight sealing of the MEUs on installation in fuel cell stacks, the MEU may furthermore contain sealing materials and optionally reinforcing materials or protective films in the edge region.

Anode and cathode contain electrocatalysts which catalytically support the respective reaction (oxidation of hydrogen or reduction of hydrogen). As a rule, noble metal-containing catalysts which contain finely divided noble metals, such as, for example, platinum, palladium, ruthenium, gold or combinations thereof, are used for this purpose. Carbon black-supported catalysts of the type Pt/C or PtRu/C, which comprise finely divided platinum or platinum/ruthenium on a conductive carbon black surface, are preferred. Typical noble metal loadings of the catalyst-coated membranes ("CCMs") are from 0.1 to 0.5 mg Pt/cm² on the anode side and from 0.2 to 1 mg Pt/cm² on the cathode side. On the anode side, special PtRu-containing catalysts are used for the operation with reformer gas. Bipolar plates (also referred to as "separator plates"), which as a rule are produced from conductive graphite and have channels for the gas supply and gas removal, are mounted between the five-layer MEUs.

The ion-conducting membrane preferably consists of proton-conducting polymer materials. A tetrafluoroethylene/fluorovinyl ether copolymer having acid functions, in particular sulphonic groups, is particularly preferably used. Such a material is sold, for example, under the trade name Nafion^{®} by E.I. DuPont. However, it is also possible to use other, in particular fluorine-free ionomer materials, such as sulphonated polyetherketones or aryl ketones or polybenzimidazoles.

For the broad commercial use of PEM fuel cells in the mobile, stationary and portable area, a further improvement of the electrochemical cell performance and a substantial reduction of the system costs are necessary. A conventional PEM fuel cell is operated in the fully humidified mode. At a cell temperature of, for example, 75°C, the anode is humidified at 75°C and the cathode also at 75°C (this is called a "saturated operation"). Anode and cathode can also be humidified at higher temperatures. In this case, the term "supersaturated" operation is used. In addition to the supply of hydrogen to the anode, the ionomer material of the anode must be continuously humidified by means of water vapor (moistening water) in order to ensure optimum proton conductivity. The water formed at the cathode (water of reaction) must be removed continuously in order to avoid flooding of the pore system of the cathode and hence hindrance of the supply of oxygen.

A considerable simplification of the system can be achieved if the fuel cell is operated with unhumidified operating gases. In this procedure, the apparatuses for (external) humidification of the gases on the cathode side and on the anode side are dispensed with, which leads to a considerable miniaturization of the system. Since, as a rule, such humidifiers are also expensive, a substantial cost reduction is achieved.

In the context of the present application, "operation with unhumidified gases" means that the fuel cell is operated with operating gases which are not additionally moistened by external apparatuses, i.e. which have a water content which corresponds to that of the initial state or the state of use. For example, this also includes the operation of the fuel cell with a hydrogen-containing reformer gas which emerges from the reformer with a low water content and is passed directly to the fuel cell. What is decisive is that an external humidifier (for example a "bubbler") is dispensed with here. Suitable operating gases for the fuel cell are dry hydrogen and hydrogen-containing gas mixtures on the anode side and dry air, oxygen and oxygen-containing gas mixtures on the cathode side.

However, the "dry" mode of operation of the PEM fuel cell entails considerable problems because the cathode layers and the ion-conducting membrane may dry out. Since water must be available in principle for the proton conduction from the anode to the cathode through the ionomer membrane, drying out of the membrane results in a considerable decrease in performance of the fuel cell itself. Furthermore, the membrane is damaged so that low ageing stability results. These problems are known in the prior art.

WO 00/19556 describes a method for operating PEM fuel cells, in which the reaction gases need not be humidified if a hydrophobic layer which has a smaller pore size than the corresponding layer on the anode side is used on the cathode side. The cathode unit consists of a hydrophobic, microporous aerogel or xerogel layer on which a platinum catalyst is applied. This prevents penetration of water to the cathode, and the water of reaction is removed via the anode. The pore sizes are stated as being less than or equal to 10 µm on the anode side and less than or equal to 30 nm on the cathode side. No details on the water repellency of the electrodes are given.

EP 569 062 B1 discloses a membrane electrode unit (MEU) in which two catalytically active cathode-side and anode-side electrode layers are applied to an ionomer membrane. The anode-side electrode layer is relatively more hydrophilic than the cathode-side one and has a larger pore size (anode pore size: from 9 to 11 nm compared with cathode pore size: from 6 to 8 nm). This means that the cathode side is more hydrophobic (i.e. less hydrophilic) and has a smaller pore size, which implies a smaller pore volume. The operation with dry gases is not mentioned, no details on the water repellency of the electrodes are given.

In EP 1 229 600, polymer electrolyte fuel cells comprising membrane electrode units with different porosities of the gas diffusion layers and conductive porous base materials are described. Good results for humidified operating conditions are obtained, when the porosity of the cathode gas diffusion layer is by the factor of 1.2 to 2 higher than the porosity of the anode gas diffusion layer. The water repellency of the cathode is higher than the water repellency of the anode. The operation with unhumidified, dry gases is not described.

It was the object of the present invention to provide membrane electrode units which have an improved performance on operation in particular with unhumidified operating gases.

It was a further object of the invention to provide a process for operating a PEM fuel cell under dry conditions based on the use of the membrane electrode units disclosed in this invention.

This objects are achieved by a membrane electrode unit according to Claim 1.

The inventors of the present application have surprisingly found that the performance of a PEM fuel cell in dry (i.e. unhumidified) operation is substantially improved if membrane electrode units (MEUs) are employed, which comprise different gas diffusion layers on the anode side and on the cathode side.

The improved membrane electrode unit comprises an ion-conducting membrane, at least one anode electrode layer, at least one cathode electrode layer, at least one porous, water repellent gas diffusion layer mounted on the anode side and at least one porous, water repellent gas diffusion layer mounted on the cathode side, wherein
- the total porosity of the cathode gas diffusion layer is higher than the total porosity of the anode gas diffusion layer (V_{Cathode} > V_{Anode}), and
- the amount of water repellent agent in the anode and the cathode gas diffusion layer is in the range of 20 to 35% by weight (based on the total weight of the gas diffusion layer), and
- the amount of water repellent agent in the anode gas diffusion layer is identical or higher than the amount of water repellent agent in the cathode gas diffusion layer (WRA_{Anode} ≥ WRA_{Kathode}).

The observed performence improvement obtained by this combination is particularly striking in the operation of the MEUs or the PEM fuel cell with unhumidified gases (i.e. in the dry mode).

The measurement of the porosity is carried out with the aid of mercury porosimetry according to DIN 66133. Hg porosimetry permits the determination of the total pore volume V in porous solid bodies from a pore size of about 2 nm. The micropores (pore diameter D greater than 50 nm) and the mesopores (pore diameter from 2 to 50 nm) are measured thereby. The method gives an integral value for V over the total pore size range. The total pore volume of a gas diffusion layer is composed of the pore volume of the substrate material and the pore volume of the microlayer.

The membrane electrode units (MEUs) according to the invention contain an anode gas diffusion layer (GDL), which is different from the cathode gas diffusion layer in terms of the total pore volume (V) and the content of a water repellent agent (WRA). The amount of water repellent agent (WRA) is in the range of 20 to 35 % by weight, with the WRA of the anode gas diffusion layer being equal or greater than the WRA of the cathode gas diffusion layer. It is necessary to maintain this high level of water repellency for the anode and the cathode gas diffusion layer.

It was found that by this measure, the water which is generated in the fuel cell during operation is effectively used for internal humidification of the operating gases. Hereby, the start-up time of the cell, particularly at room temperature, is significantly reduced.

As described above, particularly good performance values are obtained in a MEU or PEM fuel cell if the cathode gas diffusion layers have a larger pore volume than the anode gas diffusion layers.

For a typical porous, water repellent cathode gas diffusion layer based on a graphitized carbon fibre paper (e.g. Sigracet 30 BC, from SGL Carbon AG, Meitingen), the pore volume is typically in the range of V_{Cathode} = from 1.0 to 2.5 ml/g. The pore volume of the comparable anode gas diffusion layer is in the range of V_{Anode} = from 0.5 to 2.0 ml/g.

The MEU according to the invention, having a highly porous cathode gas diffusion layer and a less porous anode gas diffusion layer with an amount of water repellent agent (WRA) in the range of 20 to 35 % by weight, exhibits excellent performance in non-humidified operations (in this context, cf. the results of the electrochemical tests in **table 1)**

The effects of this increase in performance are not yet completely understood. A possible explanation is that, as a result of the larger pore volume (or the greater porosity) of the cathode side, an improved air supply to the catalytically active centres of the cathode layer can take place and hence the performance is improved. However, other explanations are also possible. The achieved improvement of the PEM fuel cell is independent of the type of water repellent agent (i.e. PTFE, FEP etc), independent of the gas diffusion substrates employed and also independent of the type of catalyst-coated membranes used.

Preferably the content of WRA is in the range between 20 and 35% by weight (based on the total weight of the layer). The water repellency can be imparted by all methods known to a person skilled in the art. The method in which a Teflon dispersion (e.g. TF 5235; 63.8% of PTFE, from Dyneon Co. Germany) is mixed with distilled water, and the carbon fibre papers are then immersed in the prepared Teflon dispersion, is customary. The coated carbon fibre paper is then dried at 200°C in a drying oven. For fusing/sintering the applied PTFE, the carbon fibre papers can be sintered in a drying oven at above 300°C. The carbon fibre papers obtained thereby typically have a mass load in the range from 20 to 35% by weight of PTFE after this treatment. In a similar way, other dispersions, containing FEP (tetrafluorethylene-hexafluoropropylene copolymer) or PVDF(polyvinylidenedifluoride) may be employed.

After water repellency has been imparted, the coating of the gas diffusion layers with a carbon black/PTFE compensating layer (a so-called "microlayer") can, if necessary, be effected. The microlayer typically contains conductive carbon black and PTFE in any desired compositions. It can be applied to the gas diffusion layers by customary coating methods, for example by doctor blading or printing methods. Ink formulations which may contain pore formers, such as, for example, polyethylene oxides (PEO) or polyethylene waxes (PE), for establishing or increasing the porosity on the anode side or the cathode side are prepared for this purpose. These materials can be thermally depolymerized without leaving a residue and can be used in various proportions in order to establish a defined pore volume of the microlayer after the calcination step. The microlayer typically has a layer thickness of from 5 to 30 micron, preferably from 10 to 20 micron and particularly preferably from 10 to 15 micron.

The examples which follow are intended to explain the invention in more detail.

### EXAMPLE 1

A catalyst-coated membrane ("CCM"; Pt loading of anode: 0.2 mg/cm², Pt loading of cathode: 0.4 mg/cm², membrane: Nafion^{®} 112, thickness 50 micron, active area 50 cm²) is combined on the cathode side with a gas diffusion layer of the type TGPH 060 (from Toray Inc., Japan). The gas diffusion layer is rendered water repellent with 29.8% by weight of PTFE, and the layer thickness of the microlayer is in the range of 10 to 15 micron after calcination.

The total pore volume (V_{Cathode}) determined with the aid of Hg porosimetry is on average 1.65 ml/g, and the air permeability (measured using a Gurley densometer) has a value of 0.6 cm³/cm²s.

A gas diffusion layer of the type TGP H 060 (from Toray Inc., Japan) rendered water repellent to the same extent with 29.8% by weight of PTFE is likewise used on the anode side. For the production of the microlayer, however, an ink having a reduced content of pore former PEO is used, so that a total pore volume of V_{Anode} = 1.15 ml/g results (measured by means of Hg porosimetry).

The components are laminated together to give an MEU, provided with seals and installed in a PEM fuel cell having an active cell area of 50 cm². The electrochemical test is effected at a cell temperature of 50°C during operation with unhumidified gases. Very good performance values are obtained, and the results are summarized in table 1

### COMPARATIVE EXAMPLE (CE)

The catalyst-coated membrane (CCM, as described in example 1 is assembled in the reverse manner and laminated. The Toray gas diffusion layer having low porosity (total pore volume V = 1.15 ml/g) is used on the cathode side, and the Toray gas diffusion layer having high porosity (total pore volume V = 1.65 ml/g) on the anode side, and the MEU thus produced is installed in a PEM fuel cell having an active cell area of 50 cm². The results are summarized in table 1. The performance values in the unmoistened mode are substantially below the values of example 2 according to the invention.

### EXAMPLE 2

A catalyst-coated membrane ("CCM"; Pt loading of anode: 0.2 mg/cm², Pt loading of cathode: 0.4 mg/cm², membrane: Nafion^{®} 112, thickness 50 micron, active area 50 cm²) is combined on the cathode side with a gas diffusion layer of the type TGPH 060 (from Toray Inc., Japan). The gas diffusion layer is rendered water repellent with 25 % by weight of PTFE, and the layer thickness of the microlayer is in the range of 10 to 15 micron after calcination. The total pore volume (V_{Cathode}) determined with the aid of Hg porosimetry is on average 1.7 ml/g.

An anode gas diffusion layer of the type TGP H 060 (from Toray Inc., Japan) rendered water repellent to the same extent with 29.8% by weight of PTFE is likewise used on the anode side. For the production of the microlayer, however, an ink having a reduced content of pore former PEO is used, so that a total pore volume of V_{Anode} = 1.15 ml/g results (measured by means of Hg porosimetry).

The components are laminated together to give an MEU, provided with seals and installed in a PEM fuel cell having an active cell area of 50 cm².

### ELECTROCHEMICAL TESTING

In the performance tests, hydrogen was used as anode and air as cathode gas. The cell temperature was 50°C. The fuel gases hydrogen and air were fed in in the dry state. No humidification was employed. The pressure of the operating gases was 1 bar (absolute). The stoichiometry of the gases was 1.0 (anode) and 2.0 (cathode). The measured cell voltages are summarized by way of example for the current density of 900 mA/cm² in table 1.

It is evident that the membrane electrode units having the arrangement according to the invention give an improved electrical performance, in contrast to the comparative example.

**Table 1:Comparison of cell voltage [mV] and power density [W/cm²] of the membrane electrode units (single PEM cell, unmoistened hydrogen/air mode, current density of 900 mA/cm²).**

| Examples | Cell voltage [mV] at 900 mA/cm² | Power density [W/cm²] |
|---|---|---|
| Example 1 | 571 | 0.514 |
| Example 2 | 560 | 0,504 |
| Comparative example (CE) | 545 | 0.491 |

## Claims

1. Membrane electrode unit for membrane fuel cells, comprising an ion-conducting membrane, at least one anode electrode layer, at least one cathode electrode layer, at least one porous, water repellent gas diffusion layer mounted on the anode side and at least one porous, water repellent gas diffusion layer mounted on the cathode side, wherein
- the total pore volume of the cathode gas diffusion layer is higher than the total pore volume of the anode gas diffusion layer (V_{Cathode} > V_{Anode}), and
- the amount of water repellent agent in the anode and the cathode gas diffusion layer is in the range of 20 to 35% by weight (based on the total weight of the gas diffusion layer), and
- the amount of water repellent agent in the anode gas diffusion layer is identical, or higher than the amount of water repellent agent in the cathode gas diffusion layer (WRA_{Anode} ≥ WRA_{Kathode}).
- the gas diffusion layers on the anode and/or the cathode side comprise a microlayer with a layer thickness from 10 to 20 micron.

2. Membrane electrode unit according to Claim 1, wherein the the total pore volume of the gas diffusion layer on the cathode side (V_{Cathode}) is in the range from 1.0 to 2.5 ml/g and the total pore volume of the gas diffusion layer on the anode side (V_{Anode}) is in the range from 0.5 to 2.0 ml/g.

3. Membrane electrode unit according to Claim 1, wherein the water repellent agent comprises of fluorinated polymers such as PTFE, PVDF, and FEP and mixtures thereof.

4. Membrane electrode unit according to Claim 1, wherein the ion-conducting membrane consists of proton-conducting polymer materials such as tetrafluoro-ethylene/fluorovinyl ether copolymers having acid functions, in particular sulphonic groups.

5. Membrane electrode unit according to Claim 1, wherein the electrode layers comprise catalytically active, finely divided noble metals, such as, for example, platinum, palladium, ruthenium, gold or combinations thereof.

6. Membrane electrode unit according to Claim 1, furthermore comprising sealing materials and optionally, reinforcing materials for gas-tight sealing on installation in membrane fuel cell stacks.

7. Membrane fuel cell stack, comprising membrane electrode units according to any one of Claims 1 to 6.

8. Process for operating a membrane fuel cell stack with dry, unhumidified operating gases, wherein the membrane fuel cell stack comprises the membrane electrode units according to any one of Claims 1 to 6.

9. Process for operating a membrane fuel cell stack according to claim 8, wherein the dry, unhumidified gases comprise hydrogen, reformate gas, oxygen or air.

## Patentansprüche

1. Membran-Elektroden-Einheit für Membran-Brennstoffzellen, enthaltend eine ionenleitende Membran, mindestens eine Anoden-Elektrodenschicht, mindestens eine Kathoden-Elektrodenschicht, mindestens ein auf der Anodenseite angebrachtes poröses, hydrophobiertes Gasverteilersubstrat sowie mindestens ein auf der Kathodenseite angebrachtes poröses, hydrophobiertes Gasverteilersubstrat, wobei
- das Gasverteilersubstrat auf der Kathodenseite ein höheres Gesamtporenvolumen als das Gasverteilersubstrat auf der Anodenseite aufweist (V_{Kathode} > V_{Anode}) und
- das Gasverteilersubstrat auf Anoden- und Kathodenseite einen Gehalt an Hydrophobierungsmittel im Bereich von 20 bis 35 Gew.-% (bezogen auf das Gesamtgewicht des Gasverteilersubstrates) aufweist und
- der Gehalt an Hydrophobierungsmittel in dem anodenseitigen Gasverteilersubstrat gleich oder größer ist als der Gehalt an Hydrophobierungsmittel in dem kathodenseitigen Gasverteilersubstrat (HPM_{Anode} ≥ HMP_{Kathode})
- die Gasverteilersubstrate auf Anoden- und/oder Kathodenseite eine Ausgleichsschicht (Microlayer) mit einer Schichtdicke von 10 bis 20 micron enthalten.

2. Membran-Elektroden-Einheit nach Anspruch 1, bei der das Gesamtporenvolumen des Gasverteilersubstrats auf der Kathodenseite (V_{Kathode}) im Bereich von 1,0 bis 2,5 ml/g und das Gesamtporenvolumen des Gasverteilersubstrats auf der Anodenseite (V_{Anode}) im Bereich von 0,5 bis 2,0 ml/g liegt.

3. Membran-Elektroden-Einheit nach Anspruch 1, bei der das Hydrophobierungsmittel Fluorpolymere wie PTFE, PVDF und FEP sowie Mischungen davon enthält.

4. Membran-Elektroden-Einheit nach Anspruch 1, bei der die ionenleitende Membran aus protonenleitenden Polymermaterialien wie Tetrafluorethylen/Fluorvinylether-Copolymeren mit Säurefunktionen, insbesondere Sulfonsäuregruppen, besteht.

5. Membran-Elektroden-Einheit nach Anspruch 1, bei der die Elektrodenschichten katalytisch aktive, fein verteilte Edelmetalle wie beispielsweise Platin, Palladium, Ruthenium, Gold oder Kombinationen davon enthalten.

6. Membran-Elektroden-Einheit nach Anspruch 1, weiterhin enthaltend Dichtungsmaterialien und gegebenenfalls Verstärkungsmaterialien zur gasdichten Abdichtung beim Einbau in Membran-Brennstoffzellenstapel.

7. Membran-Brennstoffzellenstapel, enthaltend Membran-Elektroden-Einheiten gemäß einem der Ansprüche 1 bis 6.

8. Verfahren zum Betrieb eines Membran-Brennstoffzellenstapels mit trockenen, unbefeuchteten Arbeitsgasen, bei dem der Membran-Brennstoffzellenstapel die Membran-Elektroden-Einheiten gemäß einem der Ansprüche 1 bis 6 enthält.

9. Verfahren zum Betrieb eines Membran-Brennstoffzellenstapels nach Anspruch 8, bei dem die trockenen, unbefeuchteten Gase Wasserstoff, Reformatgas, Sauerstoff oder Luft enthalten.

## Revendications

1. Unité membrane-électrodes pour piles à combustible à membrane, comprenant une membrane conductrice d'ions, au moins une couche d'électrode anodique, au moins une couche d'électrode cathodique, au moins une couche de diffusion gazeuse poreuse hydrophobe montée sur le côté anodique et au moins une couche de diffusion gazeuse poreuse hydrophobe montée sur le côté cathodique, dans laquelle
- le volume total des pores de la couche de diffusion gazeuse cathodique est supérieur au volume total des pores de la couche de diffusion gazeuse anodique (V_{Cathode} > V_{Anode}), et
- la quantité d'agent hydrophobe dans la couche de diffusion gazeuse anodique et cathodique se situe dans la gamme de 20 à 35 % en poids (rapporté au poids total de la couche de diffusion gazeuse), et
- la quantité d'agent hydrophobe dans la couche de diffusion gazeuse anodique est identique ou supérieure à la quantité d'agent hydrophobe dans la couche de diffusion gazeuse cathodique (WRA_{Anode} ≥ WRA_{Cathode}), et
- les couches de diffusion gazeuse sur le côté anodique et/ou cathodique comprennent une microcouche avec une épaisseur de couche de 10 à 20 µm.

2. Unité membrane-électrodes selon la revendication 1, dans laquelle le volume total des pores de la couche de diffusion gazeuse sur le côté cathodique (V_{Cathode}) se situe dans la gamme de 1,0 à 2,5 ml/g et le volume total des pores de la couche de diffusion gazeuse sur le côté anodique (V_{Anode}) se situe dans la gamme de 0,5 à 2,0 ml/g.

3. Unité membrane-électrodes selon la revendication 1, dans laquelle l'agent hydrophobe comprend des polymères fluorés tels que le PTFE, le PVDF, le FEP et les mélanges de ceux-ci.

4. Unité membrane-électrodes selon la revendication 1, dans laquelle la membrane conductrice d'ions se compose de matériaux polymères conducteurs de protons tels que les copolymères tétrafluoroéthylène/éther fluorovinylique comportant des fonctions acides, en particulier des groupes sulfoniques.

5. Unité membrane-électrodes selon la revendication 1, dans laquelle les couches d'électrode comprennent des métaux nobles catalytiquement actifs finement divisés tels que, par exemple, le platine, le palladium, le ruthénium, l'or ou des combinaisons de ceux-ci.

6. Unité membrane-électrodes selon la revendication 1, comprenant en outre des matériaux d'étanchéité et éventuellement des matériaux de renforcement pour un scellement étanche aux gaz lors d'une installation dans des empilements de piles à combustible à membrane.

7. Empilement de piles à combustible à membrane, comprenant des unités membrane-électrodes selon l'une quelconque des revendications 1 à 6.

8. Procédé pour faire fonctionner un empilement de piles à combustible à membrane avec des gaz de fonctionnement secs, non humidifiés, dans lequel l'empilement de piles à combustible à membrane comprend des unités membrane-électrodes selon l'une quelconque des revendications 1 à 6.

9. Procédé pour faire fonctionner un empilement de piles à combustible à membrane selon la revendication 8, dans lequel les gaz secs, non humidifiés comprennent de l'hydrogène, du gaz de reformat, de l'oxygène ou de l'air.
